# EUROPEAN PATENT APPLICATION

(11) **EP 4 234 426 A1**
(43) Date of publication of application: **30.08.2023**
(21) Application number: 22215108.6
(22) Date of filing: 20.12.2022
(51) Int. Cl.: B65D 19/18

(54) **BOX PALLET STACKING SYSTEM**

(30) Priority: 24.02.2022 ES 202230318 U
(71) Applicant: Cabka Group GmbH, 10587 Berlin (DE)
(72) Inventor: ASENSIO COTILLAS, Luis, 10587 Berlin (DE)
(74) Representative: Ungria López, Javier

(57) **Abstract**

The present invention relates to a stacking system for pallets (2) comprising a pallet (2) platform and a flat cover (3), suitable for being placed on a top end of a box (1), wherein the pallet (2) comprises one or more concave anchoring grooves (4) on a bottom base of said pallet (2) and wherein the cover (3) comprises one or more convex anchoring protrusions (5) on a top base of said cover (3). The at least one anchoring groove (4) of the pallet (2) corresponds to the at least one anchoring protrusion (5) of the cover (3), the bottom base of a pallet (2) being able to be fitted on the top base of a cover (3), by respectively fitting the corresponding anchoring grooves (4) into the anchoring protrusions (5).

## Description

### FIELD AND OBJECT OF THE INVENTION

The invention consists of a novel system for stacking pallets by using a top cover that can function as a lid of a box. In other words, said system enables the stacking of boxes or containers that rest on pallets, by a bottom end, and that can be fitted or comprise a cover, on a top end. Said system uses fastening means with more rounded shapes than the usual longitudinal and/or transversal means, enabling, in addition to proper centring and fastening of the stacked boxes, preventing the structural condition of the fastening means from being affected.

The field of application of the present invention falls within the logistics sector, and more specifically, the sector of stacking products packaged or contained in boxes or containers, which rest on pallet-type platforms, or in containers comprising a pallet-shaped support structure, for transport thereof.

### BACKGROUND OF THE INVENTION

At present, in the logistics industry, a wide variety of pallet types that can be used for the transport and storage of goods are known; most of these pallet types comprise some common technical features, such as being able to be fastened for their transfer from a U-shaped anchor called a fork.

These pallets can be made of different types of materials, most of them being made of wood or plastic, usually recycled. In fact, in their manufacture, many different types can be found in their designs, each design adapting to the needs and conditions provided according to their use, useful life, type of good, space savings in storage, etc.

One common problem of containers or boxes that comprise pallets at their bottom, or that rest on said pallets, in order to facilitate their transport, is the little stability they have when they must be stacked one on top of another.

To this end, there are already systems on the market wherein these boxes or containers include some type of lid or cover for being placed on the top thereof, which enables them to be coupled, by means of tongue-and-groove joints or the like, to a bottom of a pallet. Thus, these joints perform a fastening that facilitates the correct position of the stacked containers or boxes, between covers and pallets, favouring a correct distribution of loads, as well as adequate fastening in the event of any type of lateral load that may affect to its stability or position.

One of the problems with fasteners of this type is due to the stress concentration generated therein, as they are points of contact between elements, which are normally heavy, often causing breakage or damage that affects the integrity of the components as well as the safety of stacking.

### DESCRIPTION OF THE INVENTION

To achieve the objectives and avoid the drawbacks mentioned in the previous section, the invention consists of a novel stacking system for pallets, via covers, using fitting or coupling means with rounded shapes to avoid stress concentrations between the couplings of said elements.

This system makes it possible to keep all the stacking in better condition, using said regular and rounded shapes, which are strategically distributed, creating longer-lasting fastening and support elements, thereby avoiding stress concentrations that may damage the components.

Thus, the invention consists of a stacking system for pallets, which comprises a pallet platform, on which, for example, a box or a container can rest, by a top surface of said platform, or directly, a pallet that forms a part of a box or container in a single body. The system further comprises a flat cover suitable for being placed on a top end of a box, being able to close said box by means of a removable or detachable joint, or directly, forming a part of a box or container in a single body.

In this way, the system enables a pallet to be stacked on a flat cover, being able to use said arrangement to stack as many boxes, one on top of another, as desired, depending on the structural integrity of each of the components.

To this end, the pallet comprises one or more concave anchoring grooves on a bottom base of said pallet, and the cover comprises one or more convex anchoring protrusions on a top base of said cover. The at least one anchoring groove of the pallet corresponds to the at least one anchoring protrusion of the cover; and the bottom base of a pallet can be fitted on the top base of a cover, by respectively fitting the corresponding anchoring grooves into the anchoring protrusions.

The fact that the anchoring groove or grooves of the pallet correspond to the anchoring protrusion or protrusions of the cover means that the protrusions and the grooves comprise one same elongated shape and one same orientation and position with respect to the pallet, and that when placing a pallet on top of a cover, it being fitted between said elements, the position and size of all grooves match that of all the protrusions.

The term "box" should be understood to mean any receptacle, such as a container or rigid package, that can be closed by a lid, as defined above, and that can rest on a pallet, enabling stacking in the manner described. Preferably, the box has a rectangular prismatic shape, since it adapts to the usual rectangular shape of a pallet.

By stacking the boxes, one on top of another, fitting the pallets to the covers, the boxes are arranged in an aligned manner, since, preferably, all the boxes have the same size.

Given the described configuration of the stacking system, it is also possible to stack without the need for a box, in other words, by placing a cover on the top surface of a pallet. In this way, empty pallets can be stacked, one on top of another, inserting covers there between, since the covers, in addition to being able to be assembled on a top end of a box, can also be configured to be assembled directly on the top surface of a pallet.

As indicated, in one embodiment, the cover is connected to the top end of a box in a removable or detachable connection. In other words, the cover is removable with respect to the walls of a box, so that it can act as its lid to access the inside thereof.

In a different embodiment, the cover is attached to the top end of the box in a rigid connection. In other words, in this embodiment, the cover can form a part of one same body, with the walls of the box, being able to comprise the lid or access to said box on any side wall, the base or on the cover itself.

As also indicated, in one embodiment, the pallet can be attached to a bottom end of the box in a rigid connection, being able to comprise a single body or comprise two bodies joined by mechanical or adhesive means.

In another embodiment different from the previous one, the pallet is connected to the bottom end of the box in a removable or detachable connection.

In one embodiment, all the anchoring grooves of the pallet and all the anchoring protrusions of the cover are oriented in one same longitudinal direction with respect to the pallet. In other words, if, for example, the pallet is rectangular, all the grooves and protrusions have a direction equal to the direction that defines the pallet width or length.

In one embodiment, the anchoring grooves of the pallet are found on skids of said pallet, which are oriented in a longitudinal direction. Normally, the skids are the pallet elements that rest on the ground and are separated from each other by an adequate space for the insertion of a fork from a crane or pallet jack. In other words, in pallets of this type, the grooves must be located on said skids, specifically on the surface that rests on the ground.

In one embodiment, the pallet comprises at least two parallel skids, oriented in the longitudinal direction; wherein the bottom base of the pallet, on which the anchoring grooves are found, is located on a bottom base of said skids; wherein said bottom base of the skids comprises a flat section. This flat section enables, when the skids of the pallet rest on flat ground, the load to be correctly distributed, and the structural safety of the pallet is not affected by the presence of the grooves.

In one embodiment, the cover comprises one or more elongated convex detection protrusions on the top base of said cover. In a more specific embodiment, the detection protrusions are oriented in a longitudinal direction.

If the anchoring protrusions prevent the displacement of a pallet resting on a cover when said protrusions are inserted in the corresponding grooves of said pallet, with a particular focus on preventing longitudinal displacement, the detection protrusions act as a stop with respect to the skids, preventing or limiting the displacement of the same pallet, with a particular focus on the transverse direction. In other words, preferably, these anchoring protrusions do not fit on or insert into any groove on the pallet.

In one embodiment, the detection protrusions of a cover are located between the skids of a pallet resting on said cover, when said bottom base of said pallet is fitted on the top base of said cover.

In one embodiment, the intersections between the curved planes of the concave anchoring grooves with a flat section of the bottom base of the pallet, and between the curved planes of the convex anchoring protrusions with a flat section of the top base of the cover, are rounded. In other words, the edges that are produced when forming a concave hollow of the grooves are rounded, or spliced as known in the scope of the design, in the same way that the edges produced in the intersections of the convex protrusions with the rest of the flat surface of the cover also are, enabling fitting between the grooves and the protrusions.

These rounded shapes reduce the stress concentrations between said elements, since they are portions that can be fitted between the cover and the pallet, being the most susceptible to damage, thereby limiting their useful life, when stresses are very high. In other words, the rounding or splicing of these surfaces, as well as the curved surfaces of the grooves and the protrusions, increase the useful life of the product by reducing the stress concentration, unlike the elements currently used on the market.

In one embodiment, the pallet is made of a recycled plastic or bio-plastic material. This material makes it possible to precisely fit each of the previously defined components.

### BRIEF DESCRIPTION OF THE FIGURES

To complete the description of the invention, and for the purpose of helping to make the features thereof more readily understandable, according to a preferred exemplary embodiment thereof, a set of drawings is included wherein, by way of illustration and not limitation, the following figures have been represented:
- Figure 1 shows a bottom perspective view of a box attached to a pallet and to a removable cover with respect to the box, wherein the anchoring grooves located on the skids of the skid, as well as the flat sections of the skids can be seen.
- Figure 2 shows a top perspective view of a box attached to a pallet and to a removable cover with respect to the box, similar to figure 1, wherein the anchoring protrusions and the detection protrusions located on the top base of the cover can be seen.
- Figure 3 shows a bottom plan view of a pallet, wherein the arrangement of three skids, in parallel, as well as the anchoring grooves and the flat sections located on said skids can be seen.
- Figure 4 shows a top plan view of a cover, wherein the grooves comprising the same can be seen.
- Figure 5 shows a detailed perspective view of a cover assembled on a box, showing in detail the shape of the protrusions comprising the same.
- Figure 6 shows a detailed perspective view of a bottom surface of a pallet, showing the anchoring grooves and the flat section.

A list of the references used in the figures is provided below:
(1) Box
(2) Pallet
(3) Cover
(4) Anchoring groove
(5) Anchoring protrusion
(6) Skid
   (61) Flat section
(7) Detection protrusion

### DESCRIPTION OF A PREFERRED EMBODIMENT OF THE INVENTION

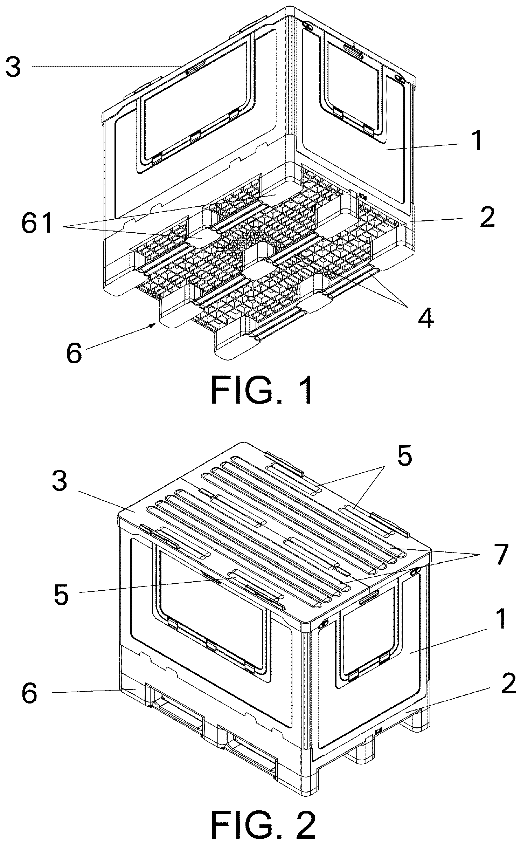

As can be seen in the figures, especially in figures 1 and 2, the invention consists of a stacking system through pallets (2) and covers (3), wherein said covers are configured to be fitted on the top opening of a box (1), and wherein the box (1) rests on a pallet (2) or forms a single body with said pallet (2).

In order for these pallets (2) to be properly stacked, either for stacking boxes (1) resting on said pallets (2), or directly stacking empty pallets (2), one on top of another, covers (3) are used which comprise a top surface configured to fit on the bottom surface of the pallets (2), in such a way that, when placing a pallet (2) on top of a cover (3), both are perfectly fitted, without the need for very aggressive tongue-and-groove joints or splices, which can be damaged if subjected to excessive loads thereon.

The bottom surface of the pallet (2) comprises a plurality of concave anchoring grooves (4) on a bottom base of said pallet (2), specifically, on the skids (6) of said pallet (2), as can be seen in figures 1, 3, and 6, so that it corresponds and can be fitted on the top surface of the cover (3).

All these anchoring grooves (4) have one same longitudinal direction in which the skids (6) are oriented and are separated by flat portions or sections (61) that allow the pallet (2) to rest on the ground or rest on a flat surface, preventing the anchoring grooves (4) from generating inclinations, tilting or misalignment of the pallet (2) with respect to the ground on which they rest.

Furthermore, the cover (3) comprises a plurality of convex anchoring protrusions (5) on a top base of said cover (3), which can be seen in figures 2, 4 and 5, wherein it can be seen that they are also oriented in a longitudinal direction.

By placing the bottom surface of the pallet (2) on the top surface of a cover (3), these anchoring protrusions (5) fit on the anchoring grooves (4) since they correspond to each other, making both portions fit together and performing adequate fastening to avoid misalignment as well as large stress concentrations.

Preferably, the boxes (1) to be stacked using this system have a rectangular prismatic shape, since they perfectly adapt to the most common types of existing pallets. Also preferably, all the boxes (1) to be stacked have the same size and shape, in the same way that the stacked pallets (2) and covers (3) are.

This system can be adapted to most types of existing pallets (2), either made of wood or plastic, and said pallets (2) can comprise different configurations. However, preferably, the pallet (2) of the invention is made of a recycled plastic or bio-plastic material that enables a more suitable manufacture than with other materials, such as wood.

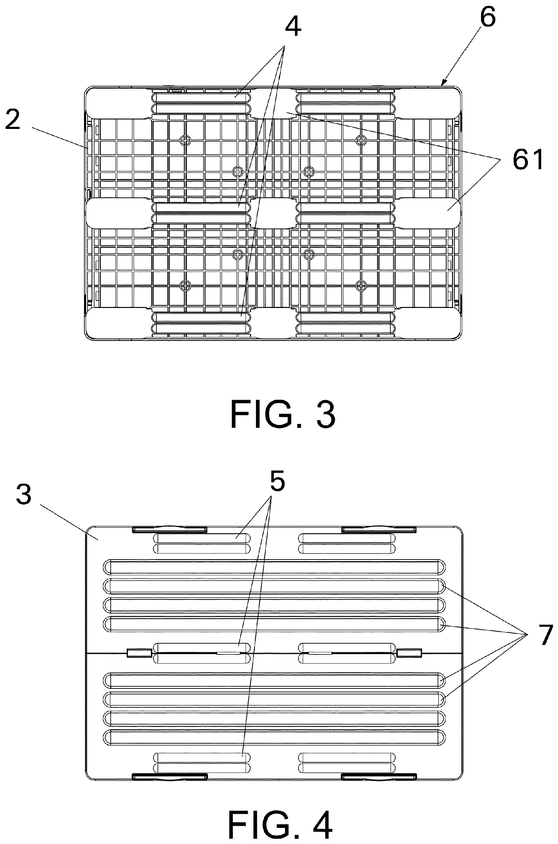

Preferably, the pallets (2) comprise two or more skids (6), and more preferably they comprise three skids (6), as shown in figures 1 and 3. There is adequate separation between said skids (6) so that the pallet (2) can be held by a fork of a forklift or a pallet jack.

In addition to the anchoring protrusions (5), the cover (3) further comprises elongated convex stop protrusions (7) on the top base of said cover (3). Preferably, these detection protrusions (7), or stop protrusions, are oriented in the same longitudinal direction as the rest of the protrusions on the cover (3) and are located between the skids (6) of a pallet (2), when the bottom base of said pallet (2) is fitted on the top base of said cover (3). In other words, by the spaces where the fork is inserted.

These detection protrusions (7) help to avoid misalignment of the pallet (2) with respect to the cover (3) since, in a certain way, they act as a stop against the sides of the skids (6) when a lateral load occurs that can displace a pallet (2) resting on a cover (3).

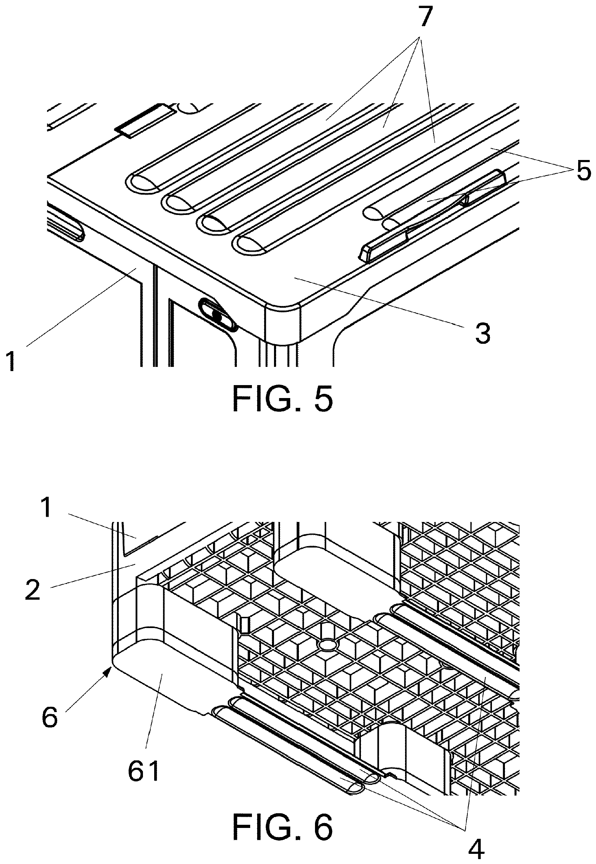

As can be seen in the details of figures 5 and 6, the intersections between the curved planes of the concave anchoring grooves (4) with the flat portion that does not have said grooves (4) on the bottom base of the pallet (2), and between the curved planes of the convex anchoring protrusions (5) with the flat portion of the top base of the cover (3) that does not have said protrusions, are rounded.

Said rounded shapes reduce problems of wear when stacking takes place, since they make it possible to reduce or prevent straight edges with changes of plane, said edges being common areas of stress concentrations.

Therefore, the advantages of the system consist of giving the pallets a longer useful life, using recyclable plastic and bioplastic materials that reduce the consumption of wood and that can also be recycled after their useful life.

## Claims

1. A stacking system for pallets (2) comprising:
- a pallet (2) platform; and
- a flat cover (3) to be placed on a top end of a box (1);
**characterised in that**:
- the pallet (2) comprises one or more concave anchoring grooves (4) on a bottom base of said pallet (2);
- the cover (3) comprises one or more convex anchoring protrusions (5) on a top base of said cover (3);
wherein the at least one anchoring groove (4) of the pallet (2) corresponds to the at least one anchoring protrusion (5) of the cover (3); and
wherein the bottom base of a pallet (2) can be fitted on the top base of a cover (3), by respectively fitting the corresponding anchoring grooves (4) into the anchoring protrusions (5).

2. The stacking system for pallets (2), according to claim 1, wherein the cover (3) is configured to connect to a top end of a box (1) in a removable or detachable connection.

3. The stacking system for pallets (2), according to claim 1, wherein the cover (3) forms a part of a top end of a box (1).

4. The stacking system for pallets (2), according to any of claims 2 to 3, wherein the pallet (2) forms a part of a bottom end of the box (1).

5. The stacking system for pallets (2), according to any of claims 2 to 3, wherein the pallet (2) is connected to a bottom end of the box (1) in a removable or detachable connection.

6. The stacking system for pallets (2), according to any of claims 2 to 5, wherein the box (1) comprises a rectangular prismatic shape.

7. The stacking system for pallets (2), according to any of the preceding claims, wherein all the anchoring grooves (4) of the pallet (2) and all the anchoring protrusions (5) of the cover (3) are oriented in one same longitudinal direction with respect to the pallet (2).

8. The stacking system for pallets (2), according to any of the preceding claims, wherein the anchoring grooves (4) of the pallet (2) are found on skids (6) of said pallet (2), which are oriented in a longitudinal direction.

9. The stacking system for pallets (2), according to the preceding claim, wherein the pallet (2) comprises at least two parallel skids (6), oriented in the longitudinal direction; wherein the bottom base of the pallet (2), on which the anchoring grooves (4) are found, is located on a bottom base of said skids (6); wherein said bottom base of the skids (6) comprises a flat section (61).

10. The stacking system for pallets (2), according to any of the preceding claims, wherein the cover (3) comprises one or more elongated convex stop protrusions (7) on the top base of said cover (3).

11. The stacking system for pallets (2), according to the preceding claim, wherein the stop protrusions (7) are oriented in a longitudinal direction.

12. The stacking system for pallets (2), according to the preceding claim and claim 8 or 9, wherein the stop protrusions (7) of a cover (3) are located between the skids (6) of a pallet (2), when said bottom base of said pallet (2) is fitted on the top base of said cover (3).

13. The stacking system for pallets (2), according to any of the preceding claims, wherein some intersections between the curved planes of the concave anchoring grooves (4) with a flat section of the bottom base of the pallet (2), and between the curved planes of the convex anchoring protrusions (5) with a flat section of the top base of the cover (3), are rounded.

14. The stacking system for pallets (2), according to any of the preceding claims, wherein the pallet (2) is made of a recycled plastic or bio-plastic material.
